# EUROPÄISCHE PATENTSCHRIFT

(11) **EP 2 181 312 B1**
(45) Veröffentlichungstag und Bekanntmachung des Hinweises auf die Patenterteilung: **17.08.2011**
(21) Anmeldenummer: 08773621.1
(22) Anmeldetag: 25.06.2008
(51) Int. Cl.: G01G 23/10

(54) **VERFAHREN UND VORRICHTUNG ZUR DYNAMISCHEN KONTROLLWÄGUNG**
METHOD AND APPARATUS FOR DYNAMICAL CHECK WEIGHING
PROCÉDÉ ET DISPOSITIF DE PESÉE DYNAMIQUE DE CONTRÔLE

(30) Priorität: 24.08.2007 DE 102007040300
(43) Veröffentlichungstag der Anmeldung: 05.05.2010
(73) Patentinhaber: Sartorius Weighing Technology GmbH, 37075 Göttingen (DE)
(72) Erfinder: KLAUER, Alfred, 37083 Göttingen (DE)
(86) Internationale Anmeldenummer: PCT/EP2008/005113
(87) Internationale Veröffentlichungsnummer: WO 2009/026981

(56) Entgegenhaltungen:
- DE-A1- 10 322 504
- US-A- 6 012 031
- US-A1- 2005 023 046

## Beschreibung

Die Erfindung bezieht sich auf ein Verfahren zur dynamischen Kontrollwägung von Objekten, die mittels einer Fördereinrichtung über einen gewichtssensitiven Bereich einer Wägeeinrichtung geführt werden, wobei der gewichtssensitive Bereich in regelmäßigen Abständen Einzel-Gewichtsmesswerte liefert, aus denen in einer digitalen Auswerteeinheit durch Mittelwertbildungen Ergebnis-Gewichtswerte abgeleitet werden.

Die Erfindung bezieht sich weiter auf eine Vorrichtung zur dynamischen Kontrollwägung von Objekten, umfassend
- eine Wägeeinrichtung mit einem gewichtssensitiven Bereich,
- eine Fördereinrichtung, welche die Objekte über den gewichtssensitiven Bereich der Wägeeinrichtung führt, wobei der gewichtssensitive Bereich (14) in regelmäßigen Abständen Einzel-Gewichtsmesswerte (E₁,...,Eₙ) liefert, aus denen eine digitale Auswerteeinheit (16) durch Mittelwertbildungen Ergebnis-Gewichtswerte (G) ableitet.

Derartige Verfahren und Vorrichtungen sind bekannt aus der DE 103 22 504 A1. Diese Druckschrift offenbart eine so genannte Kontrollwaage und ein Verfahren zu deren Einstellung und Betrieb. Unter einer Kontrollwaage versteht man eine Wägeeinrichtung, deren gewichtssensitivem Bereich mittels einer Fördereinrichtung Objekte mehr oder weniger kontinuierlich zugeführt werden, um dort gewogen zu werden. Anschließend werden die gewogenen Objekte von der Fördereinrichtung weiter transportiert und ggf. entsprechend dem Wägeergebnis sortiert. Ein typischer Einsatzbereich solcher Kontrollwaagen ist die Endkontrolle nominell gleichartiger Objekte. Beispiele wären die abschließende Füllmengenkontrolle von Konservendosen oder eine Paketsortieranlage.

Ein grundlegendes Problem solcher Anlagen ist das Finden eines befriedigenden Kompromisses zwischen Wägegenauigkeit einerseits und Wägegeschwindigkeit andererseits. Zudem werden derartige Anlagen typischerweise in industrieller Umgebung mit starken Störeinflüssen betrieben. Ein typischer Aufbau ist etwa die Zuführung der Objekte mittels eines schnell laufenden Förderbandes, welches die Objekte an einen auf dem gewichtssensitiven Bereich der Wägeeinrichtung abgestützten, separaten Förderbandabschnitt übergibt, der die Objekte nach der Wägung an einen weiteren Förderbandabschnitt übergibt. Das Wägesignal wird bei derartigen Anlagen von erheblichen Störeinflüssen durch die Bewegung des Förderbandes, dem eingangs und ausgangs des auf der Wägeeinrichtung abgestützten Förderbandabschnittes nur bereichsweisen Aufliegen des Objektes und anderen Vibrationen der industriellen Umgebung überlagert. Es hat sich daher bewährt, anstelle eines einzelnen Messwertes eine Vielzahl von Einzel-Gewichtsmesswerten für ein Objekt zu erfassen und durch geeignete Mittelwertbildung einen Ergebnis-Gewichtswert abzuleiten. In der oben genannten Druckschrift erfolgt die Mittelwertbildung über einen bestimmten Abschnitt der Folge von Einzel-Gewichtsmesswerten. Im Rahmen einer Voreinstellungsprozedur, bei der eine Vielzahl von Objekten mit variierender Wahl des Abschnittes gewogen werden, wird die optimale Lage und Länge des Mittelungsabschnitts durch "automatisches" Ausprobieren gefunden. Diese Abschnittswahl wird dann für den nachfolgenden Kontrollbetrieb der Anlage beibehalten.

Nachteilig bei dem bekannten Verfahren ist seine mangelnde Flexibilität gegenüber Änderungen der Objektgröße. Variationen der objektgröße kommen beim praktischen industriellen Betrieb häufig vor. Sie sind bei Paketsortieranlagen, die dazu dienen, Pakete unterschiedlicher Größen zu trennen, der Normalfall. Beim Einsatz zur Kontrollwägung nominell gleichartiger Objekte kann es bei Chargenwechseln zu Änderungen der Objektgrößen kommen. Änderungen der Objektgröße, insbesondere Änderungen der Längsausdehnung in Förderrichtung, haben einen starken Einfluss auf das Schwingungsverhalten des Gesamtsystems und somit auf die zur Kompensation erforderliche Filtereinstellung. Bei der bekannten Vorrichtung ist es daher erforderlich, bei jeder Änderung der Objektgröße eine erneute Voreinstellungsprozedur ablaufen zu lassen, was mit erheblichen Zeit- und damit Kostennachteilen verbunden ist und die Anlage für die Paketsortierung untauglich macht.

Es ist die Aufgabe der vorliegenden Erfindung eine gattungsgemäße Kontrollwaage und ein gattungsgemäßes Kontrollwägeverfahren derart weiterzubilden, dass eine bessere Anpassbarkeit an variierende Objektgrößen gewährleistet ist.

Diese Aufgabe wird in Verbindung mit den Merkmalen des Oberbegriffs von Anspruch 1 dadurch gelöst, dass die Auswerteeinheit eine Mehrzahl kaskadierter Mittelwertfilter unterschiedlicher Filterlängen aufweist und die Filterlängen in Abhängigkeit von einer Ausdehnung der Objekte, insbesondere ihrer Längsausdehnung in Förderrichtung um einen gemeinsamen Skalierungswert variiert werden.

Die Aufgabe wird weiter in Verbindung mit den Merkmalen des Oberbegriffs von Anspruch 9 dadurch gelöst, dass die Auswerteeinheit eine Mehrzahl kaskadierter Mittelwertfilter unterschiedlicher Filterlängen sowie Filterlängenvariationsmittel aufweist, welche die Filterlängen in Abhängigkeit von einer Ausdehnung der Objekte, insbesondere ihrer Längsausdehnung in Förderrichtung, um einen gemeinsamen Skalierungswert variieren.

Besonders vorteilhafte Ausführungsformen der Erfindung sind Gegenstand der abhängigen Ansprüche.

Nachfolgend sollen die Merkmale, Wirkungen und Vorteile des erfindungsgemäßen Verfahrens sowie der erfindungsgemäßen Vorrichtung gemeinsam diskutiert werden.

Die Erfindung beruht auf der Erkenntnis wesentlicher Eigenschaften so genannter Mittelwert-Filterkaskaden. Unter einer Mittelwert-Filterkaskade versteht man eine Abfolge von Mittelwertfiltern, die jeweils eine durch die so genannte Filterlänge vorgegebene Anzahl aufeinanderfolgender Eingabewerte in einen Mittelwert umrechnet und diesen als einen Eingabewert des nachfolgenden Filters ausgibt. Dabei sind im Wesentlichen zwei Varianten günstig: Bei der ersten Variante wird die Folge von Einzel-Messwerten in Unterabschnitte der Filterlänge unterteilt und für jeden Abschnitt ein Mittelwert errechnet und ausgegeben. Dabei wird die Anzahl der in den nächstfolgenden Filter eingegebenen Werte gegenüber der Anzahl der in den vorangehenden Filter eingegebenen Werte um einen der Filterlänge entsprechenden Faktor dezimiert. Bei der zweiten Variante werden die Mittelwerte jeweils in einem durchlaufenden Fenster der Filterlänge berechnet. Dies bedeutet, dass die Anzahl der berechneten Mittelwerte in etwa der Anzahl der in den Filter eingegebenen Einzelwerte entspricht. Durch geeignete Wahl der Filterlängen in der Kaskade können dominante Störfrequenzen sehr zuverlässig ausgefiltert werden. Die spezielle Wahl der Filterlängen ist dabei ein kompliziertes, auf den Einzelfall abzustellendes Unterfangen, dass dem Fachmann jedoch grundsätzlich bekannt ist.

Es wurde als wesentliche Eigenschaft einer solchen Filterkaskade erkannt, dass die grundlegende Form der Impulsantwort, d.h. der Übertragungsfunktion der Filterkaskade im Wesentlichen nur von dem Verhältnis der Filterlängen der einzelnen Filter zueinander abhängig ist. Eine Variation der Filterlängen ohne Veränderung ihrer relativen Verhältnisse zueinander kann die Lage und Breite der Übertragungsfunktion auf der Frequenzachse, nicht jedoch ihre grundlegende Form verändern. Diese besondere Eigenschaft macht sich die vorliegende Erfindung zu nutze.

Die Erfindung geht davon aus, dass sich mit einer Änderung der Objektgröße, insbesondere der Objektlänge in Förderrichtung, die hauptsächlichen, durch die Förderbewegung eingebrachten Störfrequenzen entsprechend verändern. Wird die Objektlänge beispielsweise reduziert, verschieben sich die Störfrequenzen hin zu höheren Frequenzen. Umgekehrtes gilt für eine Steigerung der Objektlängen. Die Erfindung schlägt nun vor, anstelle einer völligen Neueinrichtung der Filterkaskade bei einer Änderung der Objektlänge die Filterlängen der Kaskade anzupassen, ohne ihr relatives Verhältnis zueinander zu verändern. Mit anderen Worten werden die Filterlängen der Kaskade mit einem gemeinsamen Skalierungswert skaliert. Insbesondere hat sich eine lineare Abhängigkeit des Skalierungswertes von der Objektlänge als geeignete Form der Abhängigkeit erwiesen.

Ein wesentlicher Vorteil dieses Verfahrens ist die schnelle und flexible Anpassung an geänderte Objektlängen, selbst wenn diese nur kurzfristig, z.B. für einzelne Pakete einer Paketsortieranlage, auftreten sollten.

Diese flexible Anpassbarkeit erlaubt eine Automatisierung der Objektgrößenanpassung. Hierzu wird die jeweilige Längsausdehnung des Objektes von einem Längsausdehnungssensor gemessen und ein gemessener Längsausdehnungswert wird an die Auswerteeinheit zur entsprechenden Einstellung des Skalierungswertes übermittelt. Längsausdehnungssensoren, die zu diesem Zwecke von der Kontrollwaage umfasst und beispielsweise als Lichtschrankenanordnung aufgebaut sein können, sind dem Fachmann ebenso bekannt, wie die erforderlichen Techniken zur entsprechenden Einrichtung der Auswerteeinheit, die beispielsweise durch automatisierte Programmierung digitaler Filter in einer Datenverarbeitungsanlage erfolgen kann.

Ein wichtiger Schritt zur Vorbereitung des erfindungsgemäßen Verfahrensablaufs ist die anfängliche Wahl der Filterlängen für eine gegebene Objekt-Ausgangsgröße. Diese wird in der Regel empirisch vorzunehmen sein, da die jeweils auszufilternden Störfrequenzen stark von der individuellen Umgebung, der Fördergeschwindigkeit, den Objektgrößen und -gewichten etc. abhängt. Zur Vereinfachung dieses empirischen Einrichtungsverfahrens wird vorgeschlagen, dass zur Wahl der anfänglichen Einstellung der Filterlängen die Einzel-Gewichtsmesswerte eines repräsentativen Objektes in einem Ringpuffer gespeichert werden und die Mittelwertbildungen von der Auswerteeinheit wiederholt und mit iterativ variierenden Filterlängen auf den gespeicherten Werten solange durchgeführt werden, bis der resultierende Ergebnis-Gewichtswert mit einem tatsächlichen Gewichtswert des Objektes übereinstimmt. Mit anderen Worten bedeutet dies, dass das Wiegen einer Vielzahl von Objekten mit unterschiedlichen Filtereinstellungen virtuell durchgeführt wird, indem die Neuaufnahme von Einzel-Gewichtswerten vieler Objekte durch die häufige Wiederholung der im Ringpuffer gespeicherten Einzel-Gewichtsmesswerte eines einzelnen Objektes simuliert wird. Diese Simulation mit variierenden Filtereinstellungen wird solange wiederholt, bis der resultierende Ergebnis-Gewichtswert mit dem (bekannten) tatsächlichen Gewicht des Objektes übereinstimmt. Der Begriff der "Übereinstimmung" ist hier selbstverständlich als "Übereinstimmung innerhalb vorgegebener Toleranzregeln" zu verstehen, wobei die Toleranzregeln den jeweiligen Anforderungen des Einzelfalls anzupassen sind.

In besonderen Fällen kann es ausreichend sein, ausgehend von einer bereits erprobten oder standardmäßig vorgegebenen Filterlängen-Konstellation während der iterativen Variation der Filterlängen im Rahmen des Einstellungsprozesses deren Verhältnis untereinander konstant zu lassen. Mit anderen Worten bedeutet dies, dass sich in solchen Fällen die Einstellprozedur auf das Auffinden des Anfangs-Skalierungswertes, insbesondere Eins, beschränkt, von dem aus dann die objektlängenabhängigen Variationen während des Betriebes abgeleitet werden.

Bei einer Weiterbildung des erfindungsgemäßen Verfahrens ist vorgesehen, das gleiche grundlegende Prinzip auch für die Anpassung der Filterkonstellation an unterschiedliche Fördergeschwindigkeiten anzuwenden. Dies wird dadurch erreicht, dass die Filterlängen in Abhängigkeit von der Fördergeschwindigkeit um einen gemeinsamen Skalierungswert variiert werden. Dabei ist es zur Automatisierung günstig, wenn die Fördergeschwindigkeit in regelmäßigen Abständen von einem Geschwindigkeitssensor erfasst und an die Auswerteeinheit zur entsprechenden Einstellung des Skalierungswertes übermittelt wird. Da die Lage der hauptsächlichen Störfrequenzen auch wesentlich von der Fördergeschwindigkeit abhängt, erlaubt diese Weiterbildung der Erfindung einen unbeschränkten Einsatz der Kontrollwaage in einer industriellen Produktionsumgebung, wo.die Fördergeschwindigkeit technisch und/oder personell bedingt bzw. produktabhängig häufig variieren kann.

weitere Merkmale und Vorteile der Erfindung ergeben sich aus der nachfolgenden, speziellen Beschreibung sowie den Zeichnungen.

Es zeigen:
- Figur 1:: eine schematische Darstellung einer Kontrollwaage.
- Figur 2:: eine schematische Darstellung des erfindungsgemäßen Skalierungsprinzips.
- Figur 3:: eine schematische Darstellung einer bevorzugten Filtereinstellungsprozedur.

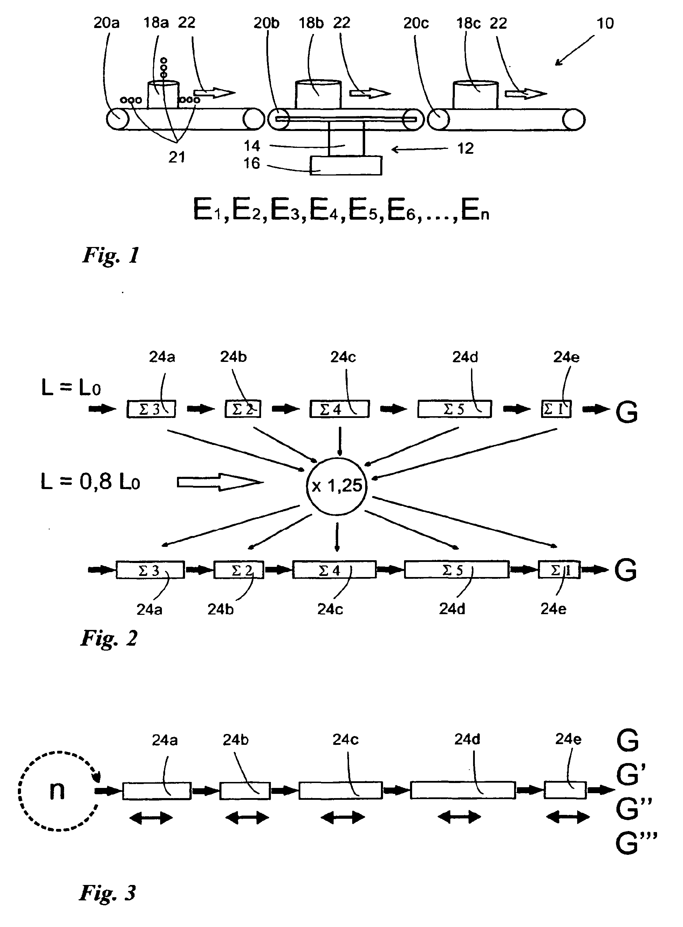

Figur 1 zeigt eine schematische Darstellung einer Kontrollwaage 10. Die Kontrollwaage 10 umfasst eine Wägeeinrichtung 12 mit einem gewichtssensitiven Bereich 14 und einer angeschlossenen Auswerteeinheit 16. Die Auswerteeinheit 16 kann insbesondere auf Basis eines Mikroprozessors aufgebaut sein.

Objekte 18a-c unterschiedlicher Größen, an denen Kontrollwägungen durchgeführt werden sollen, werden der Wägeeinrichtung 12 über ein Förderband 20, umfassend mehrere Abschnitte 20a-20c zugeführt und abgeführt. Der in Figur 1 mittlere Förderbandabschnitt 20b ist auf dem gewichtssensitiven Bereich 14 der Wägeeinrichtung 16 abgestützt. Hieraus folgt, dass ein Objekt (18b in Figur 1), welches sich im Förderbandabschnitt 20b befindet, von der Wägeeinrichtung 12 gewogen werden kann.

Im Abschnitt 20a des Förderbandes ist eine Lichtschrankenanordnung 21 vorgesehen, mit deren Hilfe die Größen der Objekte 18a-c vor deren Wägung ermittelt werden können. Bei der gezeigten Ausführungsform ist die Lichtschrankenanordnung 21 so ausgelegt, dass sowohl die Objekthöhe als auch eine Längsausdehnung in Förderrichtung ermittelt werden können. Andere Varianten, bei denen weniger oder mehr Größenparameter erfasst werden, sind ebenso denkbar. Auch ist es möglich anstelle einer echten Größenmessung eine an den Objekten angebrachte Markierung, z.B. einen Strichcode oder einen Transponder, die eine Größeninformation - ggf. über eine angeschlossene Datenbank - enthält, mit geeigneten Auslesemitteln auszulesen und auszuwerten.

Wie durch die Bewegungspfeile 22 angedeutet, bewegt sich das Objekt 18b während der Wägung mit der Fördergeschwindigkeit in Förderrichtung. Während des Zeitraums, in dem sich das Objekt 18b auf dem Förderbandabschnitt 20b befindet, liefert der gewichtsensitive Bereich 14 der Wägeeinrichtung 12, der insbesondere einen A/D-Wandler enthalten kann, in regelmäßigen Abständen, d.h. insbesondere mit der Wandlerfrequenz, eine Folge von n Einzel-Gewichtsmesswerten E1, E2,... En. Diese Folge von Einzel-Gewichtsmesswerten repräsentiert ein zeitlich schwankendes Messsignal, in dem der von dem Gewicht des Objektes 18b bedingte Messwert von Signalen überlagert ist, die den vorgenannten Störgrößen zuzuschreiben sind.

Um das Signal von diesen Störsignalen zu reinigen, wird es, wie im oberen Teil von Figur 2 schematisch dargestellt, durch eine Kaskade von Mittelwertfiltern geschickt. Die Filterkaskade enthält bei der dargestellten Ausführungsform eine Folge von fünf hintereinander geschalteten Mittelwertbildnern unterschiedlicher Filterlänge. Jeder Mittelwertbildner umfasst ein Schieberegister, das eine der Filterlänge entsprechende Anzahl von Eingangswerten zu speichern vermag. Sobald das Register gefüllt ist, wird aus den gespeicherten Einzelwerten ein Mittelwert erzeugt und als ein erster Ausgabewert ausgegeben. Jeder neue Eingangswert in das Schieberegister verdrängt den jeweils ältesten Speicherwert und stößt die Berechnung eines neuen Mittelwertes der aktuell im Speicher enthaltenen Einzelwerte an und gibt diesen als nächsten Ausgabewert aus. Die resultierende Folge von Ausgabe-Mittelwerten des ersten Mittelwertbildners wird in den zweiten Mittelwertbildner eingelesen, der nach demselben Prinzip arbeitet, aber eine andere Filterlänge aufweisen kann. Auf diese Weise durchlaufen die Werte die gesamte Filterkaskade, sodass an deren Ende eine mit G bezeichnete, gefilterte Folge von Ergebnis-Gewichtswerten entsteht. Alternativ hierzu ist es auch möglich, die Filterkaskade so einzurichten, dass ein einzelner Ergebnis-Gewichtswert resultiert. Dies kann beispielsweise erreicht werden, indem eine den letzten Filter verlassende Wertefolge geeignet zusammengefasst, z.B. gemittelt wird, indem ein einzelner Wert aus der Ausgabefolge des letzten Filters ausgewählt wird oder indem die Filterkaskade nicht nach dem oben beschriebenen Prinzip des "rollenden Fensters" sondern chargenweise arbeitet, was die Anzahl der weitergegebenen Werte in jeder Filterstufe reduziert.

Die einzelnen Filterstufen, die in Figur 2 mit den Bezugszeichen 24a-e bezeichnet sind, sind schematisch als Blöcke unterschiedlicher Länge dargestellt, was ihre unterschiedlichen Filterlängen symbolisieren soll. Insbesondere ist im Beispiel von Figur 2 angenommen, dass die Filterlängen der einzelnen Filterstufen 24a-e zueinander in einem Verhältnis von 3:2:4:5:1 stehen, was in Figur 2 durch die Symbole Σ3, Σ2, Σ4, Σ5, Σ1 angedeutet ist. In absoluten Zahlen ausgedrückt kann z.B. ein Filterlängenverhältnis von 12:8:16:20:4 jeweils zu mittelnden Werten in der Praxis günstig sein.

Die konkrete Weiterverwendung des bzw. der Ergebnis-Gewichtswerte G ist den Anforderungen des Einzelfalls anzupassen. Beispielsweise kann ein Sollgewicht des Objektes 18b als erreicht gelten, wenn ein vorgegebener Gewichtsschwellenwert von einer Folge von Ergebnis-Gewichtswerten G eine bestimmte Anzahl von Malen über- und unterschritten wird. In Fällen, in denen ein einzelner Ergebnis-Gewichtswert G berechnet wird, kann dieser mit einem oder mehreren vorgegebenen Gewichtsschwellenwerten verglichen werden und eine nachfolgende, in den Figuren nicht dargestellte Sortieranlage entsprechend schalten. Die spezielle Verwendung des oder der Ergebnis-Gewichtswerte G ist nicht Gegenstand der vorliegenden Erfindung.

Im unteren Teil von Figur.2 ist schematisch ein Anpassungsmechanismus an Änderungen der Objektlänge dargestellt. Im gezeigten Beispiel sei angenommen, dass sich die Objektlänge L bei einem Chargenwechsel zwischen dem Objekt 18b und dem Objekt 18a von einer ersten Objektlänge L0 um einen Faktor 0,8 auf L=0,8*L0 verkürzt. Diese Änderung wird von der Lichtschrankenanordnung 21 erfasst und an die Auswerteeinheit 16 übermittelt. Diese verändert daraufhin die Filterlängen der Filterstufen 24a-e. Die Änderung erfolgt für alle Filterstufen 24a-e im gleichen Maße, d.h. mit derselben vorzugsweise linearen Abhängigkeit, wobei jedoch auch nichtlineare Abhängigkeiten realisiert sein können. Im gezeigten Beispiel von Figur 2 ist eine besonders vorteilhafte Abhängigkeit des Skalierungswertes von dem die Längenänderung beschreibenden Faktor, nämlich eine proportionale Abhängigkeit realisiert. Im Ergebnis werden, wie im untersten Bereich von Figur 2 dargestellt, die Filterlängen der einzelnen Filterstufen 24a-e jeweils absolut verlängert, wobei jedoch ihr relatives Verhältnis zueinander erhalten bleibt. Dies bedeutet, dass die Filterlängen zueinander nach wie vor im Verhältnis 3:2:4:5:1 stehen, was bei identischen Objekten 18a-c im Wesentlichen zu demselben Wägeergebnis, symbolisiert durch den Ergebnis-Gewichtswert G, führt. Dies ist die Folge der Tatsache, dass eine lineare Skalierung der Filterlängen einer Kaskade die grundlegende Form der Übertragungsfunktion der Filterkaskade nicht wesentlich verändert, sondern lediglich ihre Lage und Breite beeinflusst.

Figur 3 stellt schematisch ein.bevorzugtes Verfahren zum Einstellen einer Anfangskonstellation von Filterlängen der Kaskade dar. Hierzu werden zunächst die Einzel-Gewichtsmesswerte E1, E2,... En eines Objektes 18b in der oben beschriebenen Weise erzeugt und in einen Ringpuffer mit n Speicherplätzen gespeichert. Alsdann wird die gespeicherte Wertefolge wiederholt in die Filterkaskade eingespeist, wobei bei jedem Wiederholungsschritt die Filterlängen der einzelnen Filterstufen 24a-e variiert werden, was zu unterschiedlichen Ergebnis-Gewichtswerten bzw. Wertefolgen G, G', G", G"'... führt. Mit anderen Worten wird die tatsächliche Wägung von mehreren Objekten 18a, 18b, 18c,... ersetzt durch die wiederholte Filterung der einmal gemessenen Wertefolge für das Objekt 18b. Sobald der oder die Ergebnis-Gewichtswerte die für das (bekannte) Objekt 18b erwarteten und gewünschten Eigenschaften aufweisen, kann der Einstellungsprozess abgeschlossen und die gefundene Filterkonstellation für den nachfolgenden Betrieb in der oben erläuterten Weise übernommen werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten anhand gegeben. Insbesondere kann die Anzahl und Ausgestaltung der Filterstufen der Kaskade auf den Einzelfall angepasst werden. Auch ist es möglich, Kaskaden mit unterschiedlichen Abschnitten zu verwenden, von denen nur ein oder wenige Abschnitte dem oben erläuterten Variationsprinzip folgen und ein oder mehrere andere Abschnitte unabhängig von der Fördergeschwindigkeit oder der Objektgröße konstant bleiben. Letzteres ist insbesondere sinnvoll, wenn bekannt ist, dass Geschwindigkeits- bzw. größenunabhängige Störeinflüsse die Messung überlagern.

## Patentansprüche

1. Verfahren zur dynamischen Kontrollwägung von Objekten (18a-c), die mittels einer Fördereinrichtung (20a-c) über einen gewichtssensitiven Bereich (14) einer Wägeeinrichtung (12) geführt werden, wobei der gewichtssensitive Bereich (14) in regelmäßigen Abständen Einzel-Gewichtsmesswerte (E₁,...,Eₙ) liefert, aus denen in einer digitalen Auswerteeinheit (16) durch Mittelwertbildungen Ergebnis-Gewichtswerte abgeleitet werden,
**dadurch gekennzeichnet,**
**dass** die Auswerteeinheit (16) eine Mehrzahl kaskadierter Mittelwertfilter (24a-e) unterschiedlicher Filterlängen aufweist und die Filterlängen in Abhängigkeit von einer Ausdehnung der Objekte (18a-c) um einen gemeinsamen Skalierungswert variiert werden.

2. Verfahren nach Anspruch 1,
**dadurch gekennzeichnet,**
**dass** die Variation der Filterlängen in Abhängigkeit von einer Längsausdehnung der Objekte (18a-c) in Förderrichtung erfolgt.

3. Verfahren nach einem der vorangehenden Ansprüche,
**dadurch gekennzeichnet,**
**dass** der Skalierungswert in proportionaler Weise von der Ausdehnung der Objekte (18a-c) abhängt.

4. Verfahren nach eines der vorangehenden Ansprüche,
**dadurch gekennzeichnet,**
**dass** die Ausdehnung jedes Objektes von einem Ausdehnungssensor gemessen und ein gemessener Ausdehnungswert an die Auswerteeinheit (16) zur entsprechenden Einstellung des Skalierungswertes übermittelt wird.

5. Verfahren nach einem der vorangehenden Ansprüche,
**dadurch gekennzeichnet,**
**dass** zur Wahl einer anfänglichen Einstellung der Filterlängen die Einzel-Gewichtsmesswerte (E₁,...,Eₙ) eines repräsentativen Objektes (186) in einem Ringpuffer gespeichert werden und die Mittelwertbildungen von der Auswerteeinheit (16) wiederholt und mit iterativ variierenden Filterlängen auf den gespeicherten Werten solange durchgeführt werden, bis die resultierenden Ergebnis-Gewichtswerte (G, G', G", G"') mit einem tatsächlichen Gewicht des Objektes (186) übereinstimmen.

6. Verfahren nach Anspruch 5,
**dadurch gekennzeichnet,**
**dass** während der iterativen Variation der Filterlängen deren Verhältnis untereinander konstant bleibt.

7. Verfahren nach einem der vorangehenden Ansprüche,
**dadurch gekennzeichnet,**
**dass** die Filterlängen in Abhängigkeit von einer Fördergeschwindigkeit der Fördereinrichtung um einen gemeinsamen Skalierungswert variiert werden.

8. Verfahren nach Anspruch 7,
**dadurch gekennzeichnet,**
**dass** die Fördergeschwindigkeit in regelmäßigen Abständen von einem Geschwindigkeitssensor erfasst und an die Auswerteeinheit (16) zur entsprechenden Einstellung des Skalierungswertes übermittelt wird.

9. Vorrichtung zur dynamischen Kontrollwägung von Objekten (18a-c), umfassend
- eine Wägeeinrichtung (12) mit einem gewichtssensitiven Bereich (14),
- eine Fördereinrichtung (20a-c), welche die Objekte (18a-c) über den gewichtssensitiven Bereich (14) der Wägeeinrichtung (12) führt,
wobei der gewichtssensitive Bereich (14) in regelmäßigen Abständen Einzel-Gewichtsmesswerte (E₁,...,Eₙ) liefert, aus denen eine digitale Auswerteeinheit (16) durch Mittelwertbildungen Ergebnis-Gewichtswerte (G) ableitet, **dadurch gekennzeichnet,**
**dass** die Auswerteeinheit (16) eine Mehrzahl kaskadierter Mittelwertfilter (24a-e) unterschiedlicher Filterlängen sowie Filterlängenvariationsmittel aufweist, welche die Filterlängen in Abhängigkeit von einer Ausdehnung der Objekte (18a-c) um einen gemeinsamen Skalierungswert variieren.

10. Vorrichtung nach Anspruch 9,
**dadurch gekennzeichnet,**
**dass** die Filterlängenvariationsmittel eingerichtet sind, die Filterlängen in Abhängigkeit von einer Längsausdehnung der Objekte (18a-c) in Förderrichtung zu variieren.

11. Vorrichtung nach einem der Ansprüche 9 bis 10,
**dadurch gekennzeichnet,**
**dass** der Skalierungswert in proportionaler Weise von der Längsausdehnung der Objekte (18a-c) abhängt.

12. Vorrichtung nach einem der Ansprüche 9 bis 11,
**dadurch gekennzeichnet,**
**dass** ein Ausdehnungssensor zur Erfassung eines Ausdehnungswertes jedes Objektes (18a-c) und dessen Übermittlung an die Auswerteeinheit (16) umfasst ist, wobei die Auswerteeinheit (16) eingerichtet ist, jeweils nach der Übermittlung eines aktualisierten Ausdehnungswertes den Skalierungswert entsprechend zu verändern.

13. Vorrichtung nach einem der Ansprüche 9 bis 12,
**dadurch gekennzeichnet,**
**dass** die Auswerteeinheit (16) einen Ringpuffer umfasst, in dem die Einzel-Gewichtsmesswerte (E₁, ..., Eₙ) eines repräsentativen Objektes (186) speicherbar sind, und die Auswerteeinheit (16) weiter eingerichtet ist, zur Wahl einer anfänglichen Einstellung der Filterlängen die Mittelwertbildungen auf den gespeicherten Werten solange mit iterativ variierenden Filterlängen zu wiederholen, bis die resultierenden Ergebnis-Gewichtswerte (G, G', G", G"') mit einem tatsächlichen Gewicht des Objektes übereinstimmen.

14. Vorrichtung nach Anspruch 13,
**dadurch gekennzeichnet,**
**dass** die iterative Variation der Filterlängen deren Verhältnis untereinander konstant lässt.

15. Vorrichtung nach einem der Ansprüche 9 bis 14,
**dadurch gekennzeichnet,**
**dass** die Filterlängenvariationsmittel die Filterlängen in Abhängigkeit von einer Fördergeschwindigkeit der Fördereinrichtung um einen gemeinsamen Skalierungswert variieren.

16. Vorrichtung nach Anspruch 15,
**dadurch gekennzeichnet,**
**dass** ein Geschwindigkeitssensor zur regelmäßigen Erfassung eines Fördergeschwindigkeitswertes und dessen Übermittlung an die Auswerteeinheit (16) umfasst ist, wobei die Auswerteeinheit (16) eingerichtet ist, jeweils nach der Übermittlung eines aktualisierten Fördergeschwindigkeitswertes den Skalierungswert entsprechend zu verändern.

## Claims

1. Method for dynamic check-weighing of objects (18a-c) conducted by means of a conveying device (20a-c) across a weight-sensitive region (14) of weighing equipment (12), wherein the weight-sensitive region (14) at regular intervals supplies individual weight measurement values (E₁, ..., Eₙ), from which result-weight values are derived in a digital evaluating unit (16) by mean value formations, **characterised in that** the evaluating unit (16) comprises a plurality of cascaded mean value filters (24a-e) of different filter lengths and the filter lengths are varied about a common scaling value in dependence on a dimension of the objects (18a-c).

2. Method according to claim 1, **characterised in that** the variation of the filter lengths is effected in dependence on a length dimension of the objects (18a-c) in conveying direction.

3. Method according to one of the preceding claims, **characterised in that** the scaling value depends proportionally on the dimension of the objects (18a-c).

4. Method according to any one of the preceding claims, **characterised in that** the dimension of each object is measured by a dimension sensor and a measured dimension value is communicated to the evaluating unit (16) for corresponding setting of the scaling value.

5. Method according to any one of the preceding claims, **characterised in that** for selection of an initial setting of the filter lengths the individual weight measurement values (E₁, ..., Eₙ) of a representative object (186) are stored in a ring buffer and the mean value formations are performed by the evaluating unit (16) repeatedly and with iteratively varying filter lengths on the stored values until the resulting result-weight values (G, G', G", G"') correspond with an actual weight of the object (186).

6. Method according to claim 5, **characterised in that** during the iterative variation of the filter lengths the ratio thereof to one another remains constant.

7. Method according to any one of the preceding claims, **characterised in that** the filter lengths are varied about a common scaling value in dependence on a conveying speed of

8. Method according to claim 7, **characterised in that** the conveying speed is detected at regular intervals by a speed sensor and is communicated to the evaluating unit (16) for corresponding setting of the scaling value.

9. Device for dynamic check-weighing of objects (18a-c), comprising
- weighing equipment (12) with a weight-sensitive region (14) and
- a conveying device (20a-c) which conducts the objects (18a-c) over the weight-sensitive region (14) of the weighing equipment (12),
wherein the weight-sensitive region (14) at regular intervals supplies individual weight measurement values (E₁, ..., Eₙ) from which a digital evaluating unit (16) derives result-weight values (G) by mean value formations, **characterised in that** the evaluating unit (16) comprises a plurality of cascaded mean value filters (24a-e) of different filter lengths and filter length varying means which vary the filter lengths about a common scaling value in dependence on a dimension of the objects (18a-c).

10. Device according to claim 9, **characterised in that** the filter length varying means are equipped to vary the filter lengths in dependence on a length dimension of the objects (18a-c) in conveying direction.

11. Device according to one of claims 9 and 10, **characterised in that** the scaling value proportionally depends on the length dimension of the objects (18a-c).

12. Device according to any one of claims 9 to 11, **characterised in that** a length sensor for detection of a dimension value of each object (18a-c) and communication thereof to the evaluating unit (16) is included, wherein the evaluating unit (16) is equipped to correspondingly change the scaling value after each communication of an updated dimension value.

13. Device according to any one of claims 9 to 12, **characterised in that** the evaluating unit (16) comprises a ring buffer in which the individual weight measurement values (E₁, ..., Eₙ) of a representative object (186) can be stored and the evaluating unit (16) is further equipped, for selection of an initial setting of the filter lengths, to repeat the mean value formations of stored values with iteratively varying filter lengths until the resulting result-weight values (G, G', G", G"') correspond with an actual weight of the object.

14. Device according to claim 13, **characterised in that** the iterative variation of the filter lengths leaves the ratio thereof to one another constant.

15. Device according to any one of claims 9 to 14, **characterised in that** the filter length varying means vary the filter lengths about a common scaling value in dependence on a conveying speed of the conveying device.

16. Device according to claim 15, **characterised in that** a speed sensor for regular detection of a conveying speed value and communication thereof to the evaluating means (16) is included, wherein the evaluating unit (16) is equipped to correspondingly change the scaling value after each communication of an updated conveying speed value.

## Revendications

1. Procédé servant à la pesée dynamique de contrôle d'objets (18a-c) qui sont amenés au moyen d'un dispositif de transport (20a-c) à un dispositif de pesée (12) via une zone sensible au poids (14), la zone sensible au poids (14) délivrant à des intervalles réguliers des mesures de poids individuelles (E1, ..., En) à partir desquelles des valeurs de poids résultantes sont déduites par des calculs de valeurs moyennes dans une unité d'évaluation numérique (16),
**caractérisé en ce que**
l'unité d'évaluation (16) comporte une pluralité de filtres de valeur moyenne (24a-e) mis en cascade et ayant différentes longueurs de filtre, les longueurs des filtres étant variées d'une valeur d'échelle commune en fonction d'une dimension des objets (18a-c).

2. Procédé selon la revendication 1, **caractérisé en ce que** la variation des longueurs des filtres a lieu en fonction d'une dimension longitudinale des objets (18a-c) dans la direction de transport.

3. Procédé selon l'une quelconque des revendications précédentes, **caractérisé en ce que**
la valeur d'échelle est une fonction proportionnelle de la dimension des objets (18a-c).

4. Procédé selon l'une quelconque des revendications précédentes, **caractérisé en ce que**
la dimension de chaque objet est mesurée par un capteur de dimension et une valeur de dimension mesurée est transmise à l'unité d'évaluation (16) en vue d'un réglage correspondant de la valeur d'échelle.

5. Procédé selon l'une quelconque des revendications précédentes, **caractérisé en ce que**
pour choisir un réglage initial des longueurs des filtres, les mesures de poids individuelles (E1, ..., En) d'un objet représentatif (186) sont enregistrées dans une mémoire en anneau et les calculs de valeur moyenne sont répétés par l'unité d'évaluation (16) et exécutés sur les valeurs enregistrées avec des longueurs de filtre variant de manière itérative jusqu'à ce que les valeurs de poids résultantes (G, G', G", G"') correspondent à un poids réel de l'objet (186).

6. Procédé selon la revendication 5, **caractérisé en ce que**
durant la variation itérative des longueurs des filtres, le rapport entre les longueurs reste constant.

7. Procédé selon l'une quelconque des revendications précédentes, **caractérisé en ce que**
les longueurs de filtre sont variées d'une valeur d'échelle commune en fonction d'une vitesse de transport du dispositif de transport.

8. Procédé selon la revendication 7, **caractérisé en ce que**
la vitesse de transport est détectée à intervalles réguliers par un capteur de vitesse et transmise à l'unité d'évaluation (16) en vue d'un réglage correspondant de la valeur d'échelle.

9. Dispositif de pesée dynamique de contrôle d'objets (18a-c), comportant
- un dispositif de pesée (12) ayant une zone sensible au poids (14),
- un dispositif de transport (20a-c), qui amène les objets (18a-c) au dispositif de pesée (12) via la zone sensible au poids (14),
la zone sensible au poids (14) délivrant à intervalles réguliers des mesures de poids individuelles à partir desquelles une unité d'évaluation numérique (16) déduit par des calculs de valeur moyenne des valeurs de poids résultantes (G), **caractérisé en ce que**
l'unité d'évaluation (16) comporte une pluralité de filtres de valeur moyenne (24a-e) mis en cascade et ayant différentes longueurs de filtre ainsi que des moyens de variation de longueurs de filtre qui varient les longueurs des filtres d'une valeur d'échelle commune en fonction d'une dimension des objets (18a-c).

10. Dispositif selon la revendication 9, **caractérisé en ce que**
les moyens de variation de longueurs de filtre sont agencés pour varier les longueurs des filtres en fonction d'une dimension longitudinale des objets (18a,c) dans la direction de transport.

11. Dispositif selon une des revendications 9 à 10, **caractérisé en ce que**
la valeur d'échelle est une fonction proportionnelle de la dimension longitudinale des objets (18a-c).

12. Dispositif selon une des revendications 9 à 11, **caractérisé en ce que**
elle comporte un capteur de dimension servant à détecter une valeur de dimension de chaque objet (18a-c) et à la transmettre à l'unité d'évaluation (16), ladite unité d'évaluation (16) étant agencée pour varier de manière correspondante la valeur d'échelle après chaque transmission d'une valeur de dimension actualisée.

13. Dispositif selon une des revendications 9 à 12, **caractérisé en ce que**
l'unité d'évaluation (16) comporte une mémoire en anneau dans laquelle les mesures de poids individuelles (E1, ..., En) d'un objet représentatif (186) peuvent être enregistrées, et l'unité d'évaluation (16) est en outre agencée, en vue de choisir un réglage initial des longueurs des filtres, pour répéter les calculs de valeur moyenne sur les valeurs enregistrées avec des longueurs de filtre variant de manière itérative jusqu'à ce que les valeurs de poids résultantes (G, G', G", G"') correspondent à un poids réel de l'objet.

14. Dispositif selon la revendication 13, **caractérisé en ce que**
la variation itérative des longueurs des filtres laisse contant le rapport entre elles.

15. Dispositif selon une des revendications 9 à 14, **caractérisé en ce que**
les moyens de variation de longueurs de filtre varient d'une valeur d'échelle commune les longueurs des filtres en fonction d'une vitesse de transport du dispositif de transport.

16. Dispositif selon la revendication 15, **caractérisé en ce que**
il comporte un capteur de vitesse servant à la détection régulière d'une valeur de vitesse de transport et à la transmission de celle-ci à l'unité d'évaluation (16), l'unité d'évaluation (16) étant agencée pour modifier en conséquence la valeur d'échelle après chaque transmission d'une valeur de vitesse de transport actualisée.
